**Europäisches Patentamt**

**European Patent Office**

**Office européen des brevets**

(11) Veröffentlichungsnummer: **0 258 771**
**A2**

(12) **EUROPÄISCHE PATENTANMELDUNG**

(21) Anmeldenummer: **87112237.0**

(22) Anmeldetag: **24.08.87**

(51) Int. Cl.⁴: **B23B 31/20**

(30) Priorität: **01.09.86 DE 3629722**

(43) Veröffentlichungstag der Anmeldung:
**09.03.88 Patentblatt 88/10**

(84) Benannte Vertragsstaaten:
**AT BE CH DE ES FR GB GR IT LI LU NL SE**

(71) Anmelder: **Rall, Gerhard**
**Sommerhalde 72**
**D-7142 Marbach(DE)**

(72) Erfinder: **Rall, Gerhard**
**Sommerhalde 72**
**D-7142 Marbach(DE)**

(74) Vertreter: **Kastner, Hermann, Dipl.-Ing.**
**Osterholzallee 89**
**D-7140 Ludwigsburg(DE)**

(54) **Spannfutter.**

㉗ Das Spannfutter (20), insbesondere für Werkzeugmaschinen, hat einen Futterkörper (21) mit einer kegelstumpfförmigen Führungsfläche (45). Daran wird eine Anzahl Spannbacken (47) verschiebbar geführt. Die Spannbacken (47) sind untereinander durch gummielastische Federelemente (53) verbunden, durch die sie zumindest in der mittleren Spannstellung auseinandergespreizt werden. Am Futterkörper (21) ist mittig ein Koppelteil (41) axial verschiebbar geführt, das mit der Zugvorrichtung der Werkzeugmaschine lösbar verbunden ist. An seinem vorderen Ende weist das Koppelteil (41) eine kreisringförmige ebene Anlagefläche (61) auf, die rückwärts gekehrt ist. Jeder der Spannbacken (47) weist an seinem hinteren Ende eine vorwärts gekehrte Anlagefläche (62) auf, die als Abschnitt einer Kreisringfläche ausgebildet ist, die auf die kreisringförmige Anlagefläche (61) am Koppelteil (41) abgestimmt ist. Für das Koppelteil (41) ist eine Verschiebsicherung (65) vorhanden, die in der Sicherungsstellung den Verschiebeweg des Koppelteils (41) an einer Stelle begrenzt, an der die Anlageflächen (61; 62) am Koppelteil (41) und an den Spannbacken (47) einander noch überdecken, und die in der Freigabestellung das Koppelteil (41) für einen weiteren Verschiebeweg freigibt, an dessen Ende die Spannbacken (47) vom Koppelteil (41) gelöst werden können. Ein Schlüssel (81) erleichtert das Einsetzen der Spannbacken (47), indem er diese vorübergehend mit dem Koppelteil (41) koppelt, bis dieses zusammen mit den Spannbacken (47) in die Betriebsstellung eingefahren ist.

FIG. 2

## Spannfutter

Zum Spannen von Werkstücken an Werkzeugmaschinen, insbesondere an Drehmaschinen, sind Zangenfutter bekannt, bei denen drei oder mehr Spannbacken vorhanden sind, die an kreiszylindrischen Spannbolzen angesetzt sind. Die Spannbolzen werden am Futterkörper in je einem kreiszylindrischen Führungsloch längsverschiebbar geführt, deren Längsachse geneigt ausgerichtet sind von der freien Stirnseite des Spannfutters aus zum hinteren Ende des Spannfutters hin zur Längsachse des Spannfutters hin geneigt. Die Betätigung der Spannbolzen erfolgt über eine gemeinsame Zugscheibe oder eine gemeinsamen Zugring, die bzw. der über ein Spannrohr mit der Zugvorrichtung der Werkzeugmaschine gekoppelt ist.

Diese Spannbolzen haben zwar in jeder axialen Stellung, d.h. bei jedem Spanndurchmesser des Werkstückes, stets die gleiche Anlage an der Wand ihres kreiszylindrischen Führungsloches. Da sie aber notgedrungen nur eine sehr geringe Abmessung in Umfangsrichtung haben können, ist die projizierte Anlagefläche im Führungsloch verhältnismäßig klein. Außerdem hat bei diesem Spannbolzen die Spannfläche für die Werkstücke eine verhältnismäßig kleine Umfangserstreckung, weil sie nur als Abflachung des kreiszylindrischen Spannbolzen ausgeführt werden kann.

Diese Zangenfutter haben noch den Nachteil, daß bei ihnen die Spannbolzen nahezu vollständig vom Futterkörper umgeben sind. Deswegen muß der Futterkörper eine verhältnismäßig große radiale Abmessung haben. Bei gegebenem Außendurchmesser hat das Zangenfutters nur eine verhältnismäßig kleine Durchlaßweite oder, umgekehrt, hat es bei gegebener Durchlaßweite einen verhältnismäßig großen Außendurchmesser.

Der Erfindung liegt die Aufgabe zugrunde, ein Spannfutter zu schaffen, das bei gegebenem Außendurchmesser eine größere Durchlaßweite als die bekanten Zangenfutter hat.

Diese Aufgabe wird durch ein Spannfutter mit den im Anspruch 1 angegebenen Merkmalen gelöst.

Dadurch, daß die Führungsfläche am Futterkörper und die darauf abgestimmten Führungsflächen an den Spannbacken als Kegelstumpf-Mantelflächen ausgebildet sind, können die Spannbacken mit einer verhältnismäßig geringen radialen Ausdehnung ausgebildet werden. Dadurch daß die Führungsfläche am Spannfutter als eine einzige zusammenhängende Kegelstumpf-Mantelfläche ausgebildet ist, kommt man auch bei dem Futterkörper im Bereich der Führungsfläche mit einer verhältnismäßig geringen Wandstärke aus. Das zusammen ergibt bei gegebenem Außendurchmesser des Futterkörpers eine erheblich größere Durchlaßweite der Spannbacken, als sie bei den Zangenfuttern möglich ist. Dadurch, daß die Führungsflächen am Futterkörper und an den Spannbacken eine über die gesamte Umfangserstreckung der Spannbacken gleiche Krümmung haben, ergibt sich bei den einzelnen Spannbacken eine sehr große Tragfläche mit nahezu gleichbleibender Flächenbelastung. Das läßt hohe Spannkräfte zu, ohne daß örtliche Überbeanspruchungen der miteinander zusammenwirkenden Teile befürchtet werden müssen.

Dadurch, daß am Futterköprer die Führungsfläche für die Spannbacken eine umlaufende Fläche ist, lassen sich die Einzelteile eines solchen Spannfutters, insbesondere der Futterkörper und die Spannbacken, sehr einfach und billig und vor allem mit sehr hoher Genauigkeit herstellen.

Dadurch, daß bei diesem Spannfutter die Spannbacken mittels gummielastischer Federelemente miteinander zu einem Spannkopf vereinigt sind, lassen sich die Spannbacken als Baueinheit handhaben und damit verhältnismäßig schnell und einfach einsetzen und herausnehmen.

Bei einer Ausgestaltung des Spannfutters nach Anspruch 2 wird sichergestellt, daß die Koppelung zwischen dem Koppelteil und den Spannbacken auch dann nicht unversehens aufgehoben wird, wenn die Zugvorrichtung der Werkzeugmaschine bei einer Bewegung in Richtung der Öffnungsstellung nicht über eine Hubbegrenzung verfügtoder zumindest nicht an derjenigen Stelle des Verschiebeweges, bei der die Anlageflächen am Koppelteil und an den Spannbacken einander noch ausreichend überdecken. Durch eine Weiterbildung des Spannfutters nach Anspruch 3 läßt sich die Verschiebesicherung sehr einfach und billig herstellen und auch sehr einfach bedienen. Durch eine Weiterbildung des Spannfutters nach Anspruch 4 wird sichergestellt, daß auch dann, wenn die Bedienungsperson die Sicherungsbolzen aus Unachtsamkeit einmal nicht fest angezogen haben sollte, im Betrieb der Werkzeugmaschinen die Spannbolzen sich nicht so weit lösen können, daß sie unter der Fliehkraft weggeschleudert werden und Verletzungen von Personen oder Beschädigungen von Sachen hervorrufen können. Bei der Weiterbildung nach Anspruch 5 wird dafür eine sehr einfache und wirkungsvolle Sicherung geschaffen.

Bei einer Ausgestaltung des Spannfutters nach Anspruch 6 wird erreicht, daß die beim Anfahren und Abbremsen der Werkzeugmaschine aufgrund der Massenkräfte entstehenden Beschleunigungskräfte und auch die Umfangskräfte aufgrund der Schnittkräfte nich von den Führungsflächen und Anlageflächen zwischen zwei aneinanderliegenden Teilen aufgenommen werden müssen, sondern von dem Formschloß zwischen den Fixierbolzen am Futterkörper und von den axialen Nuten an den Spannbacken aufgenommen werden.

Durch eine Ausgestaltung des Spannfutters nach Anspruch 7 wird erreicht, daß die Werkstücke in axialer Richtung eine ganz bestimmte unveränderliche Ausrichtung haben, die unabhängig von dem Spanndurchmesser der Werkstücke ist. Das Werkstück wird am Ende der Spannbewegung des Spannbacken durch die axiale Bewegungskomponente stets fest gegen das Anschlagelement gezogen. Bei einer Ausgestaltung des Spannfutters nach Anspruch 8 wird für die Werkstücke eine auf die Spannbacken bezogene eindeutige axiale Ausrichtung gegeben, die dann in Betracht kommt, wenn es nur auf eine relativ bestimmte genaue Ausrichtung ankommt.

Bei einer Ausgestaltung des Spannfutters nach Anspruch 9 wird erreicht, daß bei einem Wechsel des Spannkopfes der neue Spannkopf mittels des Schlüssels so mit dem Koppelteil gekoppelt werden kann, daß der Spannkopf über den Koppelteil mit der Zugvorrichtung der Werkzeugmaschine verbunden ist und damit entlang den kegeligen Führungsflächen so weit in das Spannfutter hineingezogen werden kann, daß die Anlagenflächen zwischen dem Koppelteil und den Spannbacken einander ausreichend überdecken. Das ist besonders für solche Spannköpfe von Vorteil, die aufgrund ihrer Abmessungen und/oder insbesondere aufgrund der Größe der Spreizkraft der gummielastischen Federelemente zwischen den Spannbacken sich nicht mehr ohne weiteres von Hand bis zur Koppelstellung in den Futterkörper hineindrücken lassen. Bei einer Weiterbildung des Spannfutters nach Anspruch 10 wird das Einrenken oder Einhängen des Schlüssels am Koppelteil erleichtert.

Durch eine Ausgestaltung des Spannfutters nach Anspruch 11 wird erreicht, daß der Spannkopf bereits außerhalb des Spannfutters mit dem Schlüssel vereinigt werden kann und beide Teile dann gemeinsam in den Futterkörper eingesetzt werden können. Durch eine Weiterbildung des Spannfutters nach Anspruch 12 wird das Vereinigen des Schlüssels mit dem Spannkopf dadurch erleichtert, daß durch die Anlagescheibe der Schlüssel gerade bis zur richtigen axialen Stellung in den Spannkopf eingeschoben werden kann, und nicht darüber hinaus, oder daß umgekehrt der Spannkopf bis zur richtigen Stelle auf den Schlüssel aufgesetzt werden kann und nicht ausversehens darüber hinausgeschoben wird.

Im folgenden wird die Erfindung anhand eines in der Zeichnung dargestellten Ausführungsbeispieles näher erläutert.

Es zeigen:

Fig. 1 einen Längsschnitt des Spannfutters mit einem Spannkopf in Spannstellung;

Fig. 2 einen Längsschnitt des Spannfutters in Lösestellung;

Fig. 3 eine Stirnansicht des Spannfutters;

Fig. 4 eine teilweise geschnitten dargestellte Ansicht eines Schlüssels zum Wechseln der Spannköpfe des Spannfutters;

Fig. 5 eine Stirnansicht des Schlüssels nach Fig. 4;

Fig. 6 bis 10 je einen Längsschnitt des Spannfutters mit dem Schlüssel in verschiedenen Betätigungsstellungen beim Ankoppeln eines Spannkopfes;

Fig. 11 bis 15 je eine ausschnittweise dargestellte Abwicklung der zu koppelnden Teile und des Schlüssels in verschiedenen Betätigungsstellungen beim Ankoppeln eines Spannkopfes;

Fig. 16 bis 18 je eine ausschnittweise dargestellte Stirnansicht der zu koppelnden Teile und des Schlüssels von der Rückseite des Spannfutters aus gesehen in verschiedenen Betätigungsstellungen beim Ankoppeln eines Spannfutters.

Das Spannfutter 20 weist als Hauptbaugruppen einen Futterkörper 21 und einen Spannkopf 22 auf.

Der Futterkörper 21 hat einen kreiszylindrischen Grundkörper 23, der mittels einer Anzahl Kopfschrauben 24 mit einem Montagering 25 verbunden ist. Die Kopfschrauben 24 sind von der vorderen freien Stirnseite 26 des Spannfutters 20 her in je ein abgesetztes Durchgangsloch eingesetzt und in ein damit fluchtendes Gewindeloch im Montagering 25 eingeschraubt. Auf diese Weise kann der Grundkörper 23 von der Stirnseite 26 her montiert und demontiert werden.

Der Grundkörper 23 und der Montagering 25 sind über eine innen gelegene zylindrische Zentrierfläche 29 bzw. eine außen gelegene Zentrierfläche 31 untereinander genau zentriert. Der Montagering 25 weist seinerseits eine innen gelegene zylindrische Zentrierfläche 32 auf, über die er an einer entsprechenden außen gelegenen Zentrierfläche der nicht dargestellten Werkzeugmaschine zentriert werden kann. Die Befestigung des Montageringes 25 erfolgt wieder mittels Kopfschrauben, die in je ein abgesetztes Durchgangsloch 33 von der Stirnseite 26 her eingesetzt werden. Auf diese Weise kann der Montagering 25 von seiner Stirnseite her montiert und demontiert werden.

Im Inneren des Futterkörpers 23 ist eine Betätigungsvorrichtung 34 untergebracht. Dazu gehören eine Zughülse 35, die an ihrem von der Stirnseite 26 abgekehrten hinteren Ende mit einem Außengewinde 36 versehen ist, mittels dessen sie mit dem Zugrohr der Werkzeugmaschine verbunden werden kann. An ihrem vorderen Ende weist die Zughülse 34 einen kreisringförmigen Flansch 37 auf. Im Flansch 37 sind eine Anzahl abgesetzter Durchgangslöcher vorhanden, in die vom hinteren Ende her Kopfschrauben 38 eingesetzt sind. Diese erstrecken sich durch den Hohlraum je einer Abstandshülse 39 hindurch und sind in ein Gewindeloch eines kreisringförmigen Koppelteils 41 eingeschraubt. Die Abstandshülsen 39 erstrecken sich durch Durchgangslöcher eines scheibenförmigen Teils 42 des Futterkörpers 23 hindurch. Auf diese Weise ist der in der Nähe der Stirnseite 26 gelegene Koppelteil 41 mit der Zughülse 35 verbunden, über die er mit der Zugvorrichtung der Werkzeugmaschinen verbunden werden kann.

Der Flansch 37 hat an seinem Außenrand eine kreiszylindrische Führungsfläche 43, die mit einer am Futterkörper 21 angeordneten innen gelegenen Führungsfläche 44 zusammenwirkt und eine axiale Führung für die Betätigungsvorrichtung 34 bildet.

Der Spannkopf 22 ist im Bereich des vorderen Endes des Futterkörpers 21 angeordnet. Dazu weist der Futterkörper 21 (strenggenommen der Grundkörper 23) eine umlaufende Führungsfläche 45 in Form einer Kegelstumpf-Mantelfläche auf, deren Kegelwinkel im allgemeinen 30° beträgt. Die Mantellinien dieser Führungsfläche 45 sind also um 15° gegenüber der Längsachse 46 des Spannfutters 20 geneigt. Der Spannkopf 22 weist bei dem dargestellten Ausführungsbeispiel sechs Spannbacken 47 auf. Diese weisen an ihrer Außenseite eine über sämtliche Spannbacken 47 quasi umlaufende Führungsfläche 48 auf, die auf die Führungsfläche 45 abgestimmt ist und die daher als Abschnitte einer Kegelstumpf-Mantelfläche ausgebildet sind. Auf ihrer Innenseite weisen die Spannbacken 47 eine Spannfläche 49 auf, die im allgemeinen als Abschnitt einer Kreiszylinderfläche ausgebildet ist. Diese Spannflächen 49 können je nach Bedarf, insbesondere je nach den Anforderungen der durch eine Strichpunktlinie angedeuteten Werkstücke 51, sowohl in Umfangsrichtung wie auch in axialer Richtung einer von der Kreiszylinderfläche abweichende Gestalt haben und beispielsweise auch in der Fläche profiliert sein.

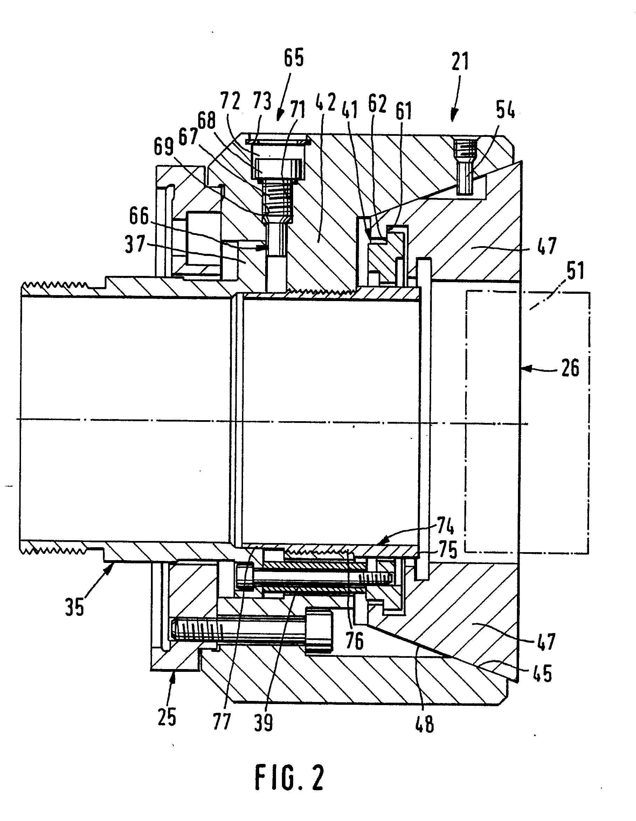

Zwischen den Spannbacken 47 sind Lücken 52 von einer gewissen Breite vorhanden. In diesen Lücken 52 sind gummielastische Federelemente 53 untergebracht, die mit jeder der beiden benachbarten Spannbacken 47 fest verbunden sind, indem sie insbesondere daran angegossen oder daran anvulkanisiert sind. Die Federelemente 53 sind aus einem hochelastischen Werkstoff hergestellt. Sie sind so ausgebildet, daß sie in der mittleren Spannstellung der Spannbacken 47 eine gewiße Spreizkraft auf die Spannbacken 47 ausüben. Als mittlere Spannstellung ist diejenige Relativstellung der Spannbacken zueinander zu verstehen, bei der ihre außen gelegenen Führungsflächen 48 satt an der kegelstumpfförmigen Hüllkurve anliegen, auf die auch die Führungsfläche 45 des Futterköpers 21 abgestimmt ist, und bei der der Halbmesser ihrer Spannfläche 49 gerade den Sollwert hat. Je nach den Abweichungen des Außendurchmessers der Werkstücke 51 von deren Sollwert ist die tatsächliche Spannstellung der Spannbacken entweder weiter außen oder weiter innen, und zwar sowohl in radialer Richtung wie auch in axialer Richtung in Bezug auf den Futterkörper 21. Die gummielastischen Federelemente 53 sollen darüber hinaus so ausgebildet sein, daß sie auch noch in der Lösestellung für die Werkstücke 51, die in Fig. 2 dargestellt ist, noch eine gewisse Spreizkraft auf die Spannbacken 47 ausüben, damit die Spannbacken 47 diese Lösestellung zuverlässig erreichen.

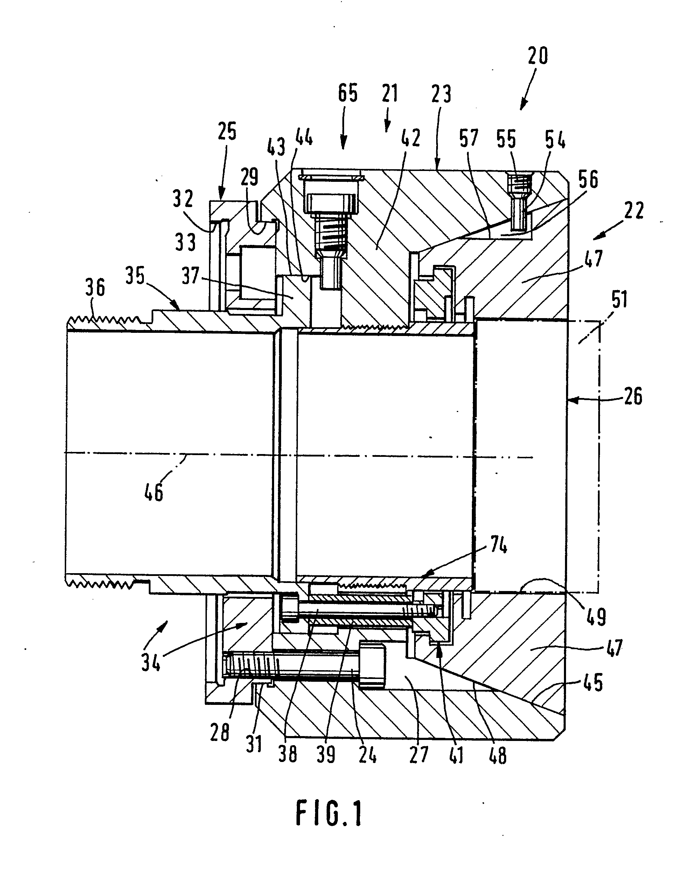

Bei dem Spannfutter 20 mit sechs Spannbacken 47 sind an drei gleichmäßig am Umfang verteilten Stellen je ein Fixierbolzen 54 angeordnet (Fig. 1). Sie sind radial ausgerichtet und ragen um ein gewisses Maß in den von der Führungsfläche 45 umgebenen Innenraum des Futterkörpers 21 hinein. Die Fixierbolzen 54 sitzen am vorderen Ende eines Gewindestiftes 55, der in ein entsprechendes Gewindeloch am Futterkörper 21 eingeschraubt ist. Drei der Spannbacken 57 sind entsprechend der Anordnung der Fixierbolzen 54 auf ihrer Außenseite mit je einer axialen Nut 56 versehen. Die lichte Weite der Axialnuten 56 ist auf den Durchmesser der Fixierbolzen 54 abgestimmt. Der Nutgrund 57 hat einen Abstand von der Längsachse 46 des Spannfutters 20, der kleiner ist als der Abstand der Stirnfläche der Fixierbolzen 54 von der Längsachse 46. Der Nutgrund 57 verläuft parallel zur Längsachse 46. In Richtung auf das hintere Ende des Spannfutters 20 laufen die Axialnuten 56 frei aus. Dadurch können die betreffenden Spannbacken 47 nach vorn frei abgezogen oder von vorn her frei in den Futterkörper 23 eingeschoben werden. In Richtung zur Stirnseite 26 hin sind die axialen Nuten 56 verschlossen, um das Eindringen von Schmutzteilchen zu verhindern.

Die Spannbacken 47 des Spannkopfes 22 werden durch das Koppelteil 41 der Betätigungsvorrichtung 34 betätigt, das heißt zusammen mit einem Werkstück 51 in die Spannstellung gezogen (Fig. 1) oder in die Freigabestellung geschoben (Fig. 2). Die letztgenannte Bewegung wird durch die gummielastischen Federelemente 53 zwischen den Spannbacken 47 unterstützt.

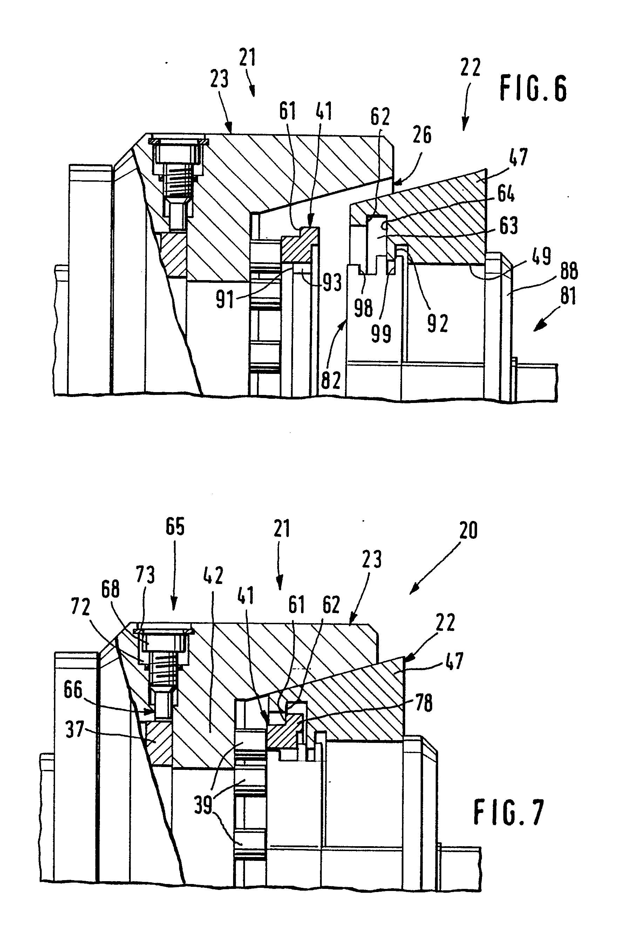

Für die Übertragung der Zugbewegung vom Koppelteil 41 auf die Spannbacken 47 ist am Koppelteil 41 eine von der Stirnseite 26 abgekehrte kreisringförmige erste Anlagefläche 61 vorhanden, die durch einen Absatz am Außenrand des Koppelteils 41 gebildet wird. Als Gegenfläche dazu ist an den Spannbacken 47 eine erste Anlagefläche 62 vorhanden, die der Stirnseite 26 zugekehrt ist und die wegen der Unterteilung der Spannbacken 47 die Form eines Abschnittes einer Kreisringfläche hat. Der kleinere Halbmesser der Anlagefläche 61 am Spannteil 41 ist etwas kleiner als der kleine Halbmesser der Spannfläche 62 an den Spannbacken 47. Das gleiche gilt für die großen Halbmesser der beiden Anlageflächen 61 und 62. Dadurch bleibt ein gewisser axialer Bewegungsraum für die Anlageflächen 62 der Spannbacken 47, auch wenn diese über die mittlere Spannstellung hinaus in den Futterkörper 21 hineingezogen werden und dabei eine über ihre mittlere radiale Stellung hinausgehende radiale Einwärtsbewegung ausführen. Der größere Halbmesser der Anlagefläche 61 am Koppelteil 41 ist um ein gewisses Maß größer, als der kleinere Halbmesser der Anlagefläche 62 an den Spannbacken 47, und zwar um soviel größer, daß in der Lösestellung der Spannbacken 47 (Fig. 2) noch eine ausreichende Überdeckung dieser beiden Anlageflächen vorhanden ist. In dieser Lösestellung sind die Spannbacken 47 um etwa 2 mm gegenüber ihrer mittleren Spannstellung zur Stirnseite 26 hinversetzt. Das entspricht bei dem gewählten Kegelwinkel der Führungsflächen 45 aund 48 von 30° einer Radialbewegung der Spannbacken von ca. 0,5 mm. Die Halbmesser der beiden Anlageflächen 61 und 62 sind darüber hinaus noch so aufeinander abgestimmt, daß nach einem von der Lösestellung gemäß Fig. 2 ausgehenden weiteren axialen Verschiebeweg von ca. 8 mm die beiden Anlageflächen 61 und 62 einander nicht mehr überdecken, mit anderen Worten, die Spannbacken 47 vom Koppelteil 41 frei sind, wie es aus Fig. 7 ersichtlich ist. Das entspricht einem zusätzlichen Radialweg von ca. 2,1 mm. In der mittleren Spannstellung beträgt daher die radiale Überdeckungsstrecke der beiden Spannflächen 61 und 62 ca. 2,6 mm.

Da die Spannbacken 47 in der Koppelstellung das Koppelteil 41 außen umgeben, wird die Anlagefläche 62 an den Spannbacke 47 dadurch erzeugt, daß im Bereich des hinteren Endes der Spannbacken 47 auf ihre Innenseite eine Umfangsnut 63 hergestellt wird (Fig. 6). Die der ersten Anlagefläche 62 gegenüberliegende Stirnfläche 64 hat von der Anlagefläche 62 einen axialen Abstand, der geringfügig größer ist als die axiale Erstreckung des am Koppelteil 41 an die Anlagefläche 61 anschließenden Teils des Querschnittsprofils. Daher können bei einer Verschiebebewegung des Koppelteil 41 aus der Spannstellung (Fig. 1) in die Lösestellung (Fig. 2) die Spannbacken 47 durch Anlage des Spannteils 41 an der Stirnfläche 64 der Spannbacken 47 diese in Richtung auf die Stirnseite 62 hin verschoben werden.

Damit diese Verschiebebewegung des Koppelteils 41 auch dann nicht über die aus Fig. 2 ersichtliche Lösestellung hinausgeht und bis zu der aus Fig. 7 ersichtlichen Entkoppelungsstellung fortgesetzt werden kann, wenn in der Zugvorrichtung der Werkzeugmaschine ein entsprechender Längsanschlag nicht vorhanden ist, ist am Backenfutter 20 eine Verschiebesicherung 65 angebracht (siehe insbesondere Fig. 2 und 7) zu dieser Verschiebesicherung gehören zwei oder drei gleichmäßig am Umfang verteilt angeordnete Sicherungsbolzen 66, die am Futterkörper 21 angeordnet sind. Diese Sicherungsbolzen 66 sind mit einem Gewindeschaft 67 und mit einem daran anschließenden Schlüsselkopf 68 versehen. Letzterer ist zweckmäßigerweise mit einem Innensechskant oder mit vergleichbaren Schlüsselflächen versehen. Die Sicherungsbolzen 66 sitzen in je einem radial ausgerichteten Durchgangsloch 69 im Futterkörper 21. Daraus ragt der eigentliche Sicherungsbolzen 66 um ein gewisses Maß einwärts in die Bewegungsbahn des Flansches 37 an der Zughülse 35 hinein. Die Sicherungsbolzen 66 sind in dem der Stirnseite 26 nächstgelegenen Endbereich des Bewegungsraumes für den Flansch 37 angeordnet, so daß sie gerade an der diesen Bewegungsraum abschließenden Stirnfläche des scheibenförmigen Teils 42 des Futterkörpers 21 anliegen. Der Durchmesser der Sicherungsbolzen 66 ist zumindest annähernd gleich dem zusätzlichen Verschiebeweg der Betätigungsvorrichtung 34 gewählt, den das Koppelteil 41 von der Lösestellung (Fig. 2) bis zur Entkoppelungsstellung (Fig. 7) zurücklegen muß. Dadurch wird erreicht, daß in der Sicherungsstellung der Sicherungsbolzen 66 der Flansch 37 in der Lösestellung (Fig. 2) stirnseitig an den Sicherungsbolzen 66 anliegt und diese sich ihrerseits an dem scheibenförmigen Teil 42 des Futterkörpers 21 abstützen. Dadurch ist die Führung der Sicherungsbolzen 66 von den auftretenden Axialkräften entlastet. Das Durchgangsloch 69 weist einen bestimmten Längenabschnitt mit einem Muttergewinde 71 auf, in das der Gewindeschaft 67 eingeschraubt wird. Für den Schlüsselkopf 68 ist eine erweiterte kreiszylindrische Ausnehmung 72 vorhanden. Am außenliegenden Endbereich dieser Ausnehmung 72 ist eine Umfangsnut angeordnet, in die ein Sicherungsring 73 eingesetzt ist. Der Sicherungsring hat eine lichte Weite oder eine lichte Projektionsfläche, die zumindest in einem Teilbereich kleiner als die axiale Projektionsfläche des Schlüsselkopfes 68 ist. Der Sicherungsring 73 bildet daher eine Ausdrehsicherung für den Sicherungsbolzen 66. Die in radialer Richtung gemessene Tiefe der Ausnehmung 72 ist so gewählt, daß der Schlüsselkopf 68 darin radial so weit auswärts bewegt werden kann, daß der Sicherungsbolzen 66 aus seiner Sicherungsstellung in der Bewegungsbahn des Flansches 37 (Fig. 2) vollständig herausbewegt werden kann (Fig. 7), so daß der Flansch 37 bis zur Anlage am scheibenförmigen Teil 42 nach vorn verschoben werden kann (Fig. 7). Die durch den Sicherungsring 73 gebildete Ausdrehsicherung sorgt dafür, daß selbst dann, wenn ein Sicherungsbolzen 66 versehentlich in seiner Freigabestellung belassen worden sein sollte, dieser sich beim Betrieb des Spannfutters 20 nicht weiter lösen kann, und daß nach dem Austreten des Gewindeschaftes 67 aus der Gewindebohrung der gesamte Sicherungsbolzen 66 unter der Wirkung der Fliehkraft nicht wegfliegen kann.

Wie aus Fig. 1 und 2 ersichtlich ist, ist im Innenraum des Spannfutters 20 ein Anschlagelement für die Werkstücke 51 vorhanden. Dieses Anschlagelement ist hier als Anschlaghülse 74 ausgebildet, an deren der Stirnseite 26 zugekehrten Stirnfläche 75 (Fig. 2) die Werkstücke 51 sich in axialer Richtung anlegen (Fig. 1), und zwar spätestens dann, wenn die Spannbacken 47 in ihre Spannstellung bewegt werden. Die Anschlaghülse 74 weist einen mit Außengewinde versehenen Längenabschnitt 76 auf, der in ein darauf abgestimmtes Muttergewinde an der inneren Umfangsfläche des scheibenförmigen Teils 42 des Futterkörpers 21 eingeschraubt ist, wobei seine axiale Lage durch eine Schulter neben dem Längenabschnitt 76 festgelegt wird. Ein an den Längenabschnitt 76 mit dem Außengewinde anschließender weiterer Längenabschnitt 77 mit glatter Innen-und Außenseite erstreckt sich bis in eine darauf abgestimmte Erweiterung der Zughülse 35 hinein, so daß beide Teile als eine Art Spaltdichtung wirken, die verhindert, das Schmutzteilchen aus dem Innenraum der Zughülse 35 und/oder dem Innenraum der Anschlaghülse 74 in den Bewegungsraum für den Flansch 37 hineinfällt und letzteren an seiner freien Bewegung hindert.

Dadurch, daß das Anschlagelement als dünnwandige Anschlaghülse 74 ausgebildet ist, deren lichte Weite zumindest annähernd gleich der lichten Weite der Zughülse 35 ist, erhält man eine axialen Durchlaßöffnung für Stangenmaterial von einer sehr großen lichten Weite. Bei der Verarbeitung von Stangenmaterial werden Spannköpfe verwendet, deren Spannflächen einen Halbmesser haben, der höchstens gleich der halben lichten Weite der Zughülse 35 und der Anschlaghülse 74 ist. Die Verringerung des Spannhalbmessers kann durch entsprechend gestaltete Spannbacken erreicht werden oder auch dadurch, daß die einzelnen Spannbacken mit Einsatzbacken ausgerüstet werden, deren innen gelegene Spannfläche den gewünschten Halbmesser hat. Soweit die Werkstücke als Einzelstücke bearbeitet werden, wie es durch das Werkstück 51 angedeutet ist, kann es zweckmäßig oder gar notwendig sein, die Anschlaghülse 74 durch eine solche Anschlaghülse zu ersetzen, die eine geringere Durchlaßweite hat, oder durch eine Anschlagkörper mit geschlossener Stirnseite.

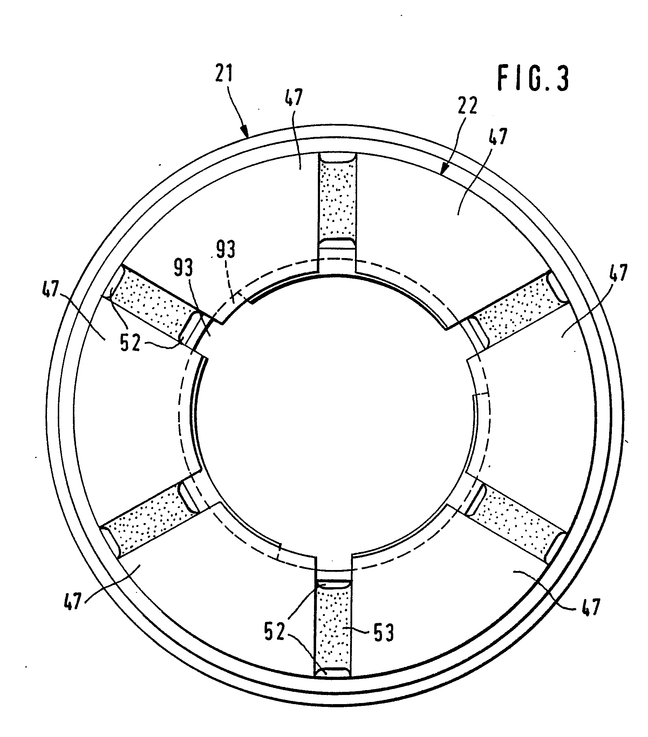

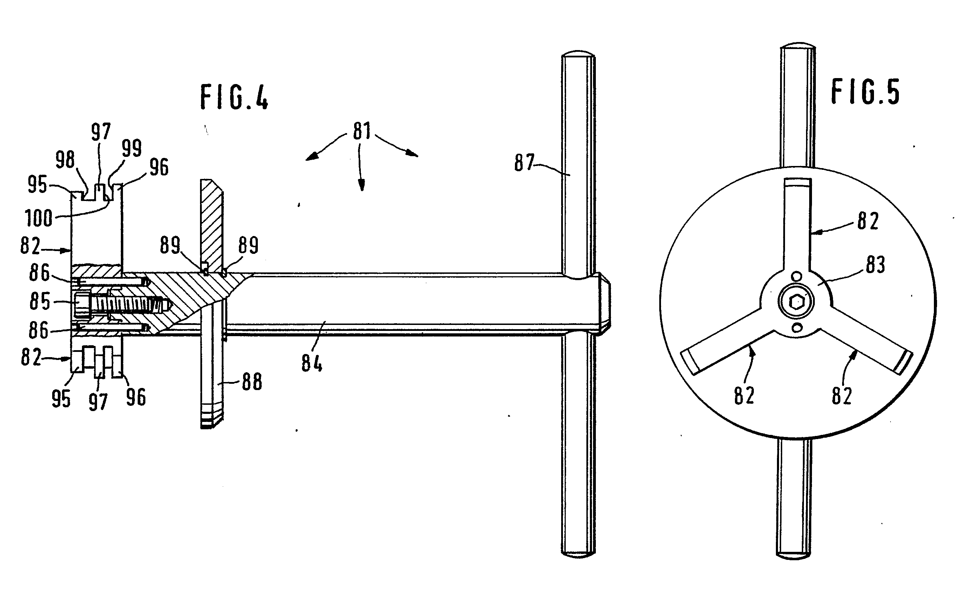

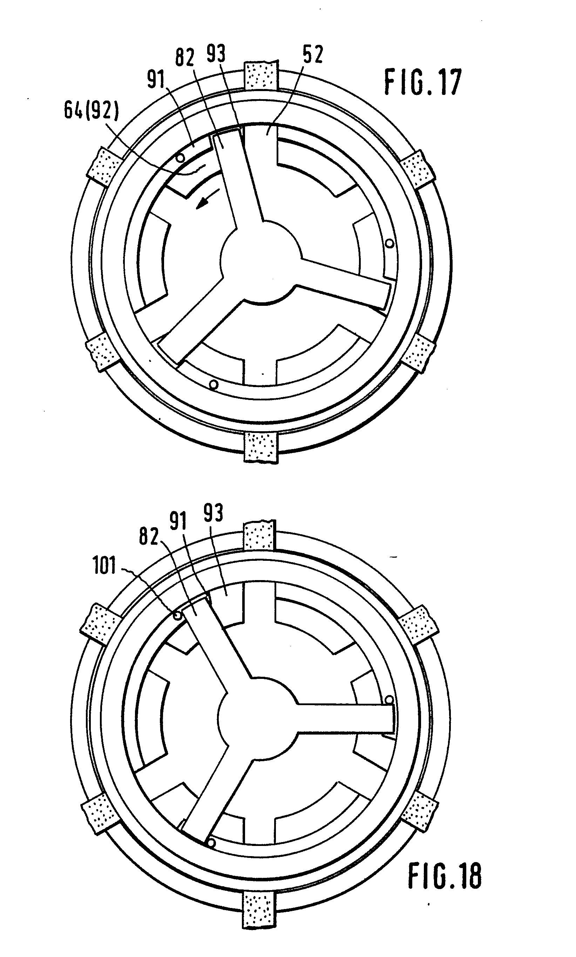

Weiter vorn wurde dargelegt, daß es zweckmäßig ist, die gummielastischen Federelemente 53 zwischen je zwei einander benachbarten Spannbacken 47 (Fig. 3) so auszubilden, daß sie nicht nur bis zur Lösestellung (Fig. 2) sondern nach Möglichkeit bis zur Entkoppelungsstellung (Fig. 7) des Spannkopfes 22 eine Spreizkraft auf die Spannbacken 47 ausüben, damit diese bei einem Wechsel des Spannkopfes so weit radial auseinander gespreizt werden, daß der Teil der Spannbacken 47 mit der ersten Anlagefläche 62 über den Profilteils 78 des Koppelteils 41 hinweg nach vorne abgezogen werden kann (Fig. 7). Das bedeutet zugleich aber auch, daß bei dem umgekehrten Bewegungsablauf spätestens in der Entkopplungsstellung (Fig. 7) die Federelemente 53 eine der Spreizkraft gleiche Widerstandskraft erzeugen, sobald die Spannbacken 47 bei der axialen Einschiebebewegung zugleich radial einwärts bewegt werden bis ihre Anlagefläche 62 die Anlagefläche 61 am Koppelteil 41 hintergreift. Zur Erleichterung dieses Koppelvorganges ist es zweckmäßig, die Zugkraft der Zugvorrichtung der Werkzeugmaschine zu Hilfe zu nehmen. Dafür ist es erforderlich, die Spannbacken 47 des Spannkopfes 22 - schon dann mit dem Koppelteil 41 kraft-oder besser formschlüssig zu koppeln, noch ehe die beiden Anlagenflächen 61 und 62 wirksam werden können. Dazu dient ein Montageschlüssel oder kurz Schlüssel 81 der in Fig. 4 und Fig. 5 im einzelnen dargestellt ist, und der ausschnittweise in Fig. 6 ... Fig. 18 im Einsatz zu sehen ist.

Der Schlüssel 81 weist drei Schlüsselbärte 82 auf, die am Umfang gleichmäßig verteilt sind. Die drei Schlüsselbärte 82 sind gemeinsam an einem Nabenteil 83 angeordnet (Fig. 5), der mit dem Schaft 84 mittels einer Kopfschraube 85 lösbar verbunden ist. Für die drehfeste Verbindung des Nabenteils 83 mit dem Schaft 84 sorgen zwei axial ausgerichtete Mitnehmerstifte 86, die durch Durchgangslöcher im Nabeneil 83 hindurchgesteckt und in damit fluchtende Sacklöcher im Schaft 84 eingesteckt sind. Am anderen Ende des Schaftes 84 ist ein Knebel 87 angeordnet. Auf dem Schaft 84 sitzt außerdem eine Anlagescheibe 88, die mittels zweier Sicherungsringe 89 in einem bestimmten axialen Abstand von den Schlüsselbärten 82 festgehalten wird. Die Anlagescheibe 88 weist auf der den Schlüsselbärten 82 zugekehrten Seite eine kreisringförmige Ausnehmung auf, in die der eine Sicherungsring 89 vollständig eintaucht, so daß er über die zugeordnete Stirnfläche der Anlagescheibe 88 nicht vorsteht.

Die Schlüsselbärte 82 haben eine Umfangserstreckung oder, mit anderen Worten, in Umfangsrichtung eine Dicke, die kleiner als der lichte Abstand zwischen zwei einander benachbarten Spannbacken 47 ist, und zwar gemessen bei der engsten Stellung der Spannbacken 47.

Für das Zusammenwirken mit dem Schlüssel 81 sind sowohl am Koppelteil 41 zweite Anlageflächen 91 wie auch an den Spannbacken 47 je eine zweite Anlagefläche 92 vorhanden, und zwar jeweils an der Innenseite dieser Teile (Fig. 6). Die Anlageflächen 91 sind von der Stirnseite 26 abgekehrt. Die Anlageflächen 92 sind der Stirnseite 26 zugekehrt. Die Anlageflächen 91 und die Anlageflächen 92 sind Abschnitte von Kreisringflächen. Am Koppelkörper 41 wird diese Kreisringfläche am hinteren Ende des Koppelteils 41 durch einen Absatz geschaffen. An den Spannbacken 47 wird diese Kreisringfläche im Längenbereich zwischen der ersten Anlagefläche 62 und der Spannfläche 49, also im hinteren Bereich der Spannbacken 47, je nach dem Halbmesser der Spannflächen 49 entweder ebenfalls durch einen Absatz oder durch eine dort eingestochene Nut geschaffen.

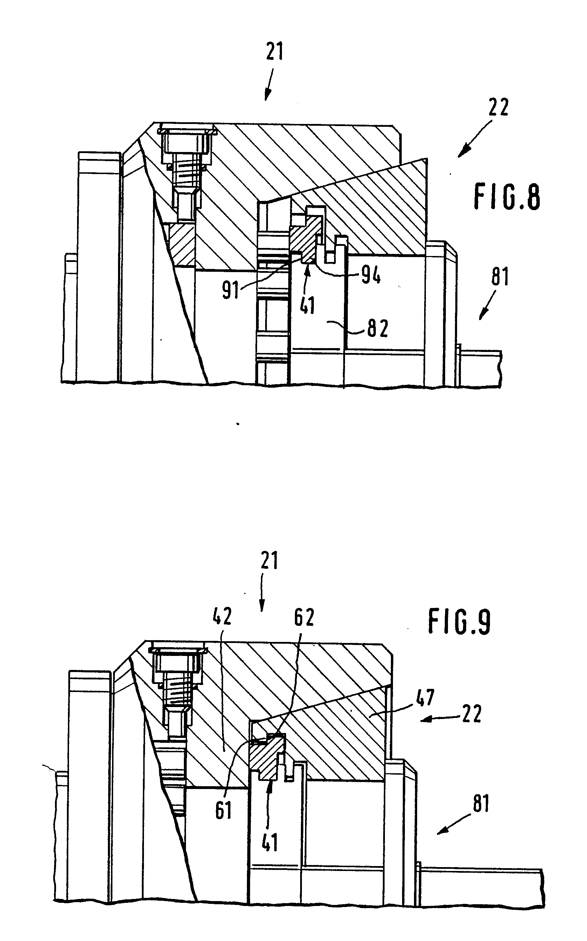

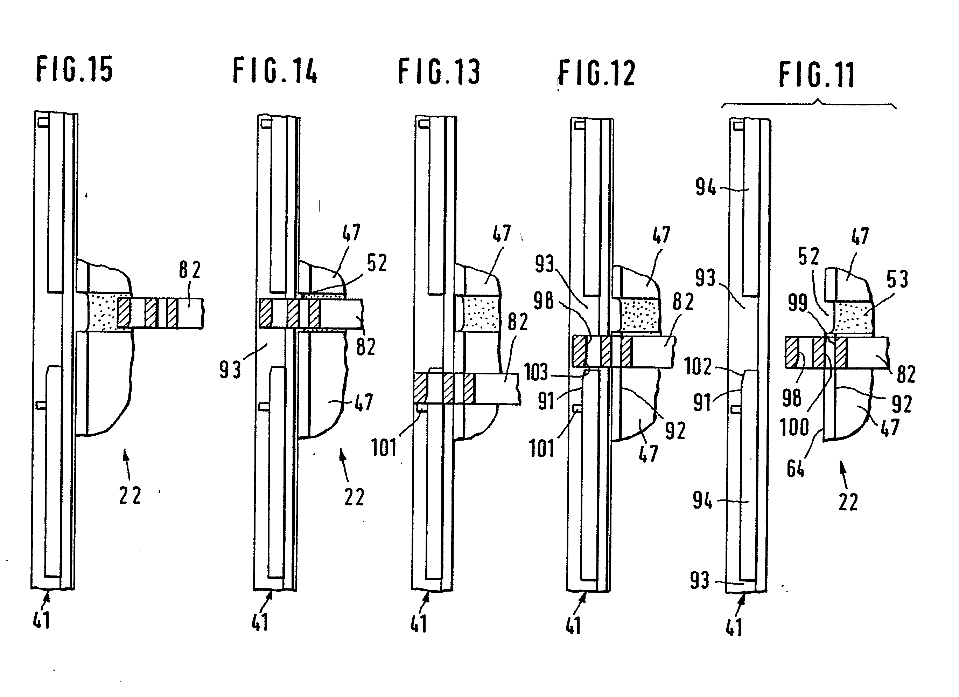

Am Koppelteil 41 werden die einzelnen Anlageflächen 91 durch Axialnuten 93 voneinander getrennt, die an dem Profilteil 94 des Koppelteils 41 angebracht sind, dessen eine Stirnfläche die Kreisringfläche für die Anlageflächen 91 bildet (Fig. 8). Die Anzahl der Axialnuten 93 und ihre Verteilung am Umfang ist genau gleich der Anzahl und Anordnung der Lücken 52 zwischen den Spannbacken 47. Die Querschnittsform oder axiale Aufrißform der axialen Nuten 93 ist gleich dem Abschnitt einer Kreisringfläche, deren innerer und äußerer Halbmesser zumindest annähernd gleich den Halbmessern der an sie anschließenden Anlageflächen 91 ist. Die Umfangserstreckung der Axialnuten 93 ist zumindest annähernd gleich der zweifachen Umfangserstreckung der Schlüsselbärte 82 (Fig. 3 und Fig. 11). An Spannkopf 22 ergibt sich die Trennung der zweiten Anlageflächen 92 durch die Aufteilung des Spannkopfes 22 in einzelne voneinander getrennte Spannbacken 47 und durch die zwischen ihnen vorhandenen Lücken 52 von ganz alleine.

An den Schlüsselbärten 82 sind drei Stufen vorhanden (Fig. 4). Die erste Stufe 95 befindet sich an dem vom Knebel 87 abgekehrten Ende der Schlüsselbärte. Die zweite Stufe 96 befindet sich am entgegengesetzten Ende der Schlüsselbärte 82. Die dritte Stufe 97 befindet sich dazwischen. Die dem Knebel 87 und, beim Einsatz des Schlüssels 81, der Stirnseite 26 des Spannfutters 20 zugekehrte Stirnfläche der ersten Stufe 95 bildet eine erste Anlagefläche 98 der Schlüsselbärte 82. Die von der Stirnseite 26 abgekehrte Stirnfläche der zweiten Stufe 96 bildet eine zweite Anlagefläche 99 und die der Stirnseite 26 zugekehrte Stirnfläche der dritten Stufe 97 bildet eine dritte Anlagefläche 100 der Schlüsselbärte 82. Die Gegenfläche der dritten Anlagefläche 100 wird an den Spannbacken 47 durch die Stirnfläche 64 bebildet, die der ersten Anlagefläche 62 gegenüberliegt. An den Schlüsselbärten 82 haben die erste Anlagefläche 98 und die zweite Anlagefläche 99 einen lichten Abstand, der geringfügig größer ist, als der axiale Abstand der ersten Anlagefläche 61 am Koppelteil 41 und der ersten Anlagefläche 62 an den Spannbacken 47, wenn diese beiden Teile sich in der Köppelstellung befinden (Fig. 7 bis Fig. 10).

Im folgenden wird anhand Fig. 6 ... Fig. 18) gezeigt, wie der Spannkopf 22 mit Hilfe des Schlüssels 81 in den Futterkörper 21 eingesetzt wird. Dabei sind bei den Abwicklungen gemäß Fig. 11 ... Fig. 15 vom Kopplungsteil 41 und von den Spannbacken 47 je die Innenansicht und von dem Schlüsselbart 82 die teilweise geschnitten dargestellte Außenansicht in ein und derselben Darstellung miteinander vereinigt, um das Zusammenwirken dieser Teile besser zeigen zu können. Dabei ist der an den Schlüsselbart 82 anschließende Schaft des Schlüssels 81 der besseren Übersicht wegen in der gleichen Art wie der Schlüsselbart 82 dargestellt und genau so bezeichnet.

Zu Anfang wird der Schlüssel 81 in den freien Spannkopf 22 eingeführt, indem die Schlüsselbärte 82 durch die Lücken 52 zwischen zwei Spannbacken eingeschoben werden (Fig. 16), und zwar so weit, bis die Anlagescheibe 88 an der Stirnseite der Spannbacken 47 anliegt (Fig. 6). Der Schlüssel 81 wird um wenigsten eine Schlüsselbreite, d.h. um die Umfangserstreckung der Schlüsselbärte 82, im Uhrzeigersinne gedreht. Diese Drehbewegung erscheint in den Rückansichten nach Fig. 16 ... Fig. 18 als Bewegung im Gegenuhrzeigersinne. Nach dieser Drehbewegung fluchten die Schlüsselbärte nicht mehr mit den Lücken 52 sondern mit den daran anschließenden zweiten und dritten Anlageflächen 92 bzw. 64 der Spannbacken 47 (Fig. 17 und Fig. 11 rechte Teildarstellung). Damit ist der Spannkopf 22 mit dem Schlüssel 81 gekoppelt.

Der Schlüssel 81 mit dem Spannkopf 22 wird in den Futterkörper 21 in einer solchen Drehstellung eingeführt, daß die Schlüsselbärte 82 mit den Axialnuten 93 am Koppelteil 41 fluchten (Fig. 17 und Fig. 12). Der Schlüsel 81 wird dabei in den Futterkörper 21 so weit hineingeschoben oder erforderlichenfalls hineingedrückt, daß die erste Anlagefläche 98 an den Schlüsselbärten 82 zumindest annähernd mit der ersten Anlagerfläche 91 am Koppelteil 41 in Umfangsrichtung fluchtet (Fig. 7 und Fig. 12). In dieser Axialstellung des Spannkopfes 22 wird der Schlüssel 81 nochmals um eine Schlüsselbreite im Uhrzeigersinne verdreht, so daß die erste Anlagefläche 98 der Schlüsselbärte 82 in der axialen Fluchtline der ersten Anlagefläche 91 am Koppelteil 41 steht (Fig. 18, Fig. 13 und Fig. 8). Damit diese Drehstellung des Schlüssels 81 ohne Schwierigkeiten sicher erreicht wird, sind am Koppelteil 41 neben dieser Dreh-Endstellung der Schlüsselbärte 82 je ein Anschlagstift 101 angeordnet, an denen die Schlüsselbärte 82 sich anlegen (Fig. 18 und Fig. 13). Diese Drehbewegung des Schlüssels 81 wird dadurch erleichtert, daß am Koppelteil 41 die zweiten Anlageflächen 91 im Anschluß an die benachbarte Axialnut 93 mit einer Einlaufschräge 102 versehen sind. Desgleichen sind auch die Anlageflächen 98 der ersten Stufe 95 der Schlüsselbärte 82 mit einer Einlaufschräge 103 versehen. Mit dieser zweiten Drehbewegung des Schlüssels 81 sind der Spannkopf 22 und das Koppelteil 41 über den Schlüssel 81 axial miteinander gekoppelt. Diese axiale Stellung des Spannkopfes 22 wird daher auch als Koppelstellung bezeichnet, die bei dem umgekehrten Ablauf der Kopplungsvorgänge zugleich auch die Entkopplungsstellung des Spannkopfes 22 darstellt.

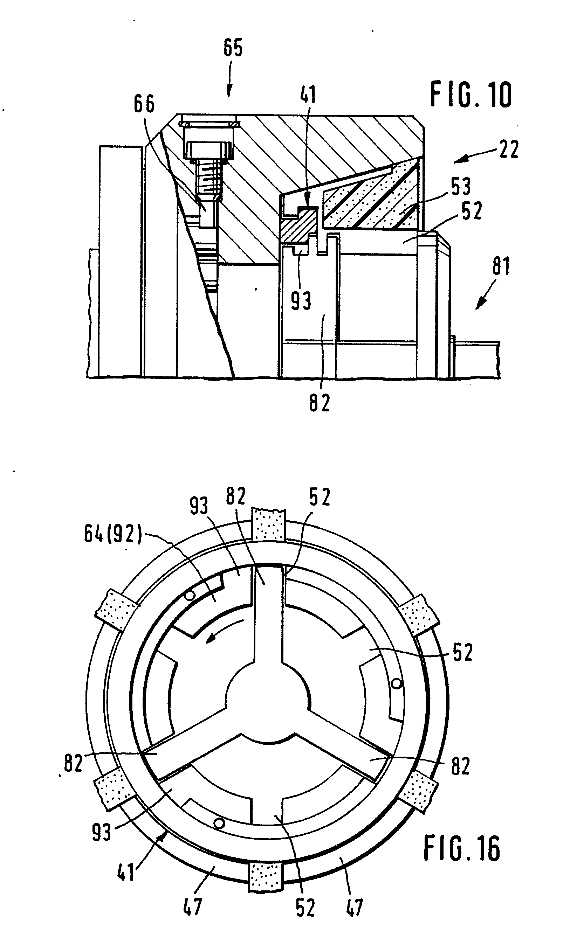

Nach diesem Koppelvorgang wird die Zugvorrichtung der Werkzeugmaschine betätigt und über die Betätigungsvorrichtung 34 (Fig. 1) das Koppelteil 41 zusammen mit dem Spannkopf 22 in den Futterkörper 21 so weit hineingezogen, bis das Koppelteil 41 an dem scheibenförmigen Teil 42 des Futterkörpers 21 anliegt (Fig. 9). Bei diese axialen Verschiebebewegung des Koppelteils 41 und des Spannkopfes 22 bewegen sich die Spannbacken 47 gleichzeitig radial einwärts, so daß - schon nach einer kurzen Wegstrecke die ersten Anlageflächen 62 an den Spannbacken 47 die ersten Anlageflächen 61 am Koppelteil 41 zu überdecken beginnen. Diese Überdeckung ist in der axialen Endstellung der beiden Teile (Fig. 9) am größten. In dieser axialen Stellung des Koppelteils 41 werden die Sicherungsbolzen 66 der Verschiebesicherung 65 in ihre Sicherungsstellung hineinbewegt (Fig. 10), in der sie in die Bewegungsbahn des Flansches 37 an der Zughülse 35 hineinragen, so daß bei einer späteren nach vorne gerichteten Verschiebung der Zughülse 35 der Flanschteil 37 an dem Sicherungsbolzen 66 anschlägt (Fig. 2), und dadurch die miteinander gekoppelten Teile, nämlich das Koppelteil 41 und der Spannkopf 22, nicht mehr unversehens in die Entkopplungsstellung (Fig. 7) gelangen können.

Der Schlüssel 81 wird um zwei Schlüsselbreiten in eine Drehstellung zurückgedreht, in der die Schlüsselbärte 82 sowohl mit den Lücken 52 zwischen den Spannbacken 47 wie auch mit den Axialnuten 93 im Koppelteil 41 axial fluchten (Fig. 14 und Fig. 10). In dieser Drehstellung wird der Schlüssel 81 aus dem Spannfutter 20 herausgezogen (Fig. 15). Der Koppelvorgang für das Spannfutter 22 ist damit beendet.

Zum Herausnehmen eines im Spannfutter 20 sitzenden Spannkopfes 22 wird der Schlüssel 81 in die Lücken 52 wiederum soweit eingeschoben, bis seine Anlagescheibe 88 am Spannkopf 22 anliegt. Dann wird der Schlüssel um eine Schlüsselbreite im Uhrzeigersinne verdreht, bis seine Schlüsselbärte mit den Anlageflächen 92 und 64 an den Spannbacken 47 fluchten (Fig. 12). In dieser Drehstellung des Schlüssels 81 werden die Verschiebesicherungen 65 aus der Sicherungsstellung in die Freigabestellung bewegt. Daraufhin kann mit der Zugvorrichtung der Werkzeugmaschine das Koppelteil 41 zusammen mit dem Spannkopf 22 nach vorne geschoben werden, bis beide Teile ihre Entkopplungsstellung (Fig. 7) erreicht haben. Dann kann der Spannkopf 22 mit dem Schlüssel 81 aus dem Futterkörper 21 vollständig herausgezogen werden. Nachdem der Schlüsssel 81 im Gegenuhrzeigersinn in die Ausgangsstellung zurückgedreht wurde (Fig. 16), kann er aus dem Spannkopf 22 herausgezogen werden oder, umgekehrt ausgedrückt, der Spannkopf 22 vom Schlüssel 81 abgehoben oder abgezogen werden.

Beim Auswechseln eines Spannkopfes 22 wird zuvor die Anschlaghülse 74 aus dem Futterkörper 21 herausgedreht und anschließend wieder hineingedreht. Bei Bedarf wird auch die Anschlaghülse 74 gegen eine andere Anschlaghülse ausgetauscht.

## Ansprüche

1. Spannfutter insbesondere für Werkzeugmaschinen, mit den Merkmalen:

-ein Futterkörper (21) weist für die Führung von Spannbacken (47) Führungsflächen (45) auf, deren Mantellinien gegenüber der Längsachse (46) des Spannfutters (20) um einen gewissen Winkel geneigt sind,

-es ist eine Anzahl Spannbacken (47) vorhanden, die auf der Außenseite eine Führungsfläche (48) aufweisen, die auf die zugeordnete Führungsfläche (45) am Futterkörper (21) abgestimmt ist und die auf der von der Führungsfläche (48) abgekehrten Innenseite eine Spannfläche (49) für die Werkstücke (51) aufweisen,

-ein Koppelteil (41) ist am Futterkörper (21) in axialer Richtung verschiebbar geführt und mit der Zugvorrichtung der Werkzeugmaschine lösbar verbunden,

-das Koppelteil (41) weist an seinem der (freien) Stirnseite (26) des Spannfutters (20) zugekehrten Endbereich eine (erste) kreisringförmige ebene Anlagefläche (61) auf, deren Flächennormale von der Stirnseite (26) des Spannfutters (20) abgekehrt ist,

-die Spannbacken (47) weisen an dem von den Spannflächen (49) für die Werkstücke (51) abgekehrten Ende eine ebene (erste) Anlagefläche (62) auf, deren Flächenormale der Stirnseite (26) des Spannfutters (20) zugekehrt ist und die als Kreisringabschnitt ausgebildet ist, der zumindest annähernd auf die kreisringförmige Anlagefläche (61) am Koppelteil (41) abgestimmt ist,

**gekennzeichnet** durch die Merkmale:

-am Futterkörper (21) sind die Führungsflächen für die Spannbacken (47) als eine einzige zusammenhängende Führungsfläche (45) in Form einer Kegelstumpf-Mantelfläche ausgebildet,

-die Spannbacken (47) haben auf ihrer Außenseite eine Führungsfläche (48), die die Form eines Abschnittes einer Kegelstumpf-Mantelfläche hat und die für eine mittlere axiale Spannstellung der Spannbacken (47) auf die Führungsfläche (45) am Futterkörper (21) abgestimmt ist,

-zwischen den Spannbacken (47) sind gummielastische Federelemente (53) vorhanden, die mit den jeweils benachbarten Spannbacken (47) fest verbunden sind und diese zu einem Spannkopf (22) vereinigen und die so ausgebildet sind, daß sie auf die Spannbacken (47) zumindest in der mittleren axialen Spannstellung eine Spreizkraft ausüben.

2. Spannfutter nach Anspruch 1,
**gekennzeichnet** durch das Merkmal:

-für das Koppelteil (41) ist eine Verschiebesicherung (65) vorhanden, die in der Sicherungsstellung den Verschiebeweg des Koppelteils (61; 62) an einer Stelle begrenzt, bei der die Anlageflächen (61) am Koppelteil (41) und an den Spannbacken (47) einander noch überdecken, und die in der Freigabestellung das Koppelteil (41) für einen weiteren Verschiebeweg freigibt.

3. Spannfutter nach Anspruch 2,
**gekennzeichnet** durch die Merkmale:

-die Verschiebesicherung (65) weist wenigstens einen Sicherungsbolzen, vorzugsweise zwei oder drei gleichmäßig am Umfang verteilt angeordnete Sicherungsbolzen (66) auf, die in zumindest annähernd radial ausgerichteten Durchgangslöchern (69) des Futterkörpers (21) in radialer Richtung verstellbar geführt sind,

-die Sicherungsbolzen (66) sind vorzugsweise mit einem Gewindeschaft (67) und einem Schlüsselkopf (68) versehen und in einem Abschnitt des zugehörigen Durchgangsloches (69) des Futterkörpers (21) bewegbar, der mit einem auf den Gewindeschaft (67) abgestimmten Muttergewinde (71) versehen ist.

4. Spannfutter nach Anspruch 3,
**gekennzeichnet** durch das Merkmal:

-in der Bewegungsbahn eines jeden Sicherungsbolzens (66) ist in Richtung auf die Freigabestellung hin eine Ausdrehsicherung an derjenigen Stelle angebracht, die an die Freigabestellung des Sicherungsbolzens (66) anschließt.

5. Spannfutter nach Anspruch 4,
**gekennzeichnet** durch das Merkmal:

-die Ausdrehsicherung wird durch einen Sicherungsring (73) gebildet, der in eine Umfangsnut des Durchgangsloches (69) des Futterkörpers (21) einsetzbar ist und dessen lichte Weite zumindest in einem Teilbereich kleiner ist als die Projektion des Sicherungsbolzens (66), insbesondere seines Schlüsselkopfes (69).

6. Spannfutter nach einem der Ansprüche 1 bis 5,
**gekennzeichnet** durch die Merkmale:

-am Futterkörper (21) sind im Bereich der Führungsfläche (45) mindestens ein Fixierbolzen, bevorzugt jedoch drei Fixierbolzen (54) vorhanden, die am Umfang gleichmäßig verteilt angeordnet sind und die zumindest annähernd in radialer Richtung um ein gewisses Maß in den von der Führungsfläche (45) umgebenen Innenraum des Futterkörpers (21) hineinragen,

-an wenigstens einem, bei drei Fixierbolzen (54) an den drei entsprechenden Spannbacken (47) des Spannkopfes (22) ist im Bereich deren Führungsfläche (46) eine auf den Fixierbolzen (54) abgestimmte Längsnut (56) vorhanden, die in Richtung des kleineren Halbmessers der Führungsfläche (46) in axialer Richtung frei mündet und vorzugsweise in Richtung des größeren Halbmessers der Führungsfläche (46) axial geschlossen ist, und deren Nutgrund (57) von der Längsachse (46) des Spannfutters (20) einen Abstand hat, der kleiner als der Achsabstand der innen gelegenen Stirnseite der Fixierbolzen (54) ist.

7. Spannfutter nach einem der Ansprüche 1 bis 6,
**gekennzeichnet** durch die Merkmale:

-es ist ein Anschlagelement für die Werkstücke (51) vorhanden, das als kreiszylindrischer Anschlagkörper oder, bevorzugt, als kreiszylindrische Anschlaghülse (74) ausgebildet ist,

-das Anschlagelement (74) ist mittig zur Längsachse (46) des Futterkörpers (21) angeordnet und mit dem Futterkörper (21) lösbar verbunden,

-das Anschlagelement (74) ist so ausgebildet und angeordnet, daß seine freie Stirnseite (75) in einer Ebene steht, die im Bereich der Spannflächen (49) der Spannbacken (47) nach vor deren hinterem Ende gelegen ist.

8. Spannfutter nach einem der Ansprüche 1 bis 6,
**gekennzeichnet** durch das Merkmal:
-an der Innenseite der Spannbacken (47) ist am hinteren Ende deren Spannfläche je eine ebene Anschlagfläche für die Werkstücke angeordnet, die als Abschnitt einer Kreisringfläche ausgebildet ist, deren innerer Halbmesser kleiner als der Halbmesser der Spannfläche ist und deren Flächennormale dem freien Ende des Spannfutters zugekehrt ist.

9. Spannfutter nach einem der Ansprüche 1 bis 8,
**gekennzeichnet** durch die Merkmale:
-es ist ein Schlüssel (81) zum Wechseln des Spannkopfes (22) vorhanden,
-der Schlüssel (81) weist einen Schaft (84) auf, an dessen einem Ende mindestens zwei, bevorzugt drei Schlüsselbärte (82) angeordnet sind, die am Umfang gleichmäßig verteilt sind,
-die Schlüsselbärte (82) haben eine Umfangserstreckung die kleiner als der lichte Abstand zwischen zwei einander benachbarten Spannbacken (47) ist,
-am Koppelteil (41) sind zweite Anlageflächen (91) vorhanden, deren Anzahl und Anordnung auf die Anzahl und Anordnung der Schlüsselbärte (82) am Schlüssel (81) abgestimmt sind und die vorzugsweise die Form eines Abschnittes einer Kreisringfläche haben, deren Flächennormale von der Stirnseite (26) des Spannfutters (20) abgekehrt ist,
-am Koppelteil (41) sind in der untereinander gleichen Umfangsrichtung neben den zweiten Anlageflächen (91) je eine Axialnut (93) vorhanden, deren Querschnittsform gleich dem Abschnitt einer Kreisringfläche ist, deren innerer und äußerer Halbmesser zumindest annähernd gleich den Halbmessern der zweiten Anlageflächen (91) sind, deren Umfangserstreckung zumindest annähernd gleich der zweifachen Umfangserstreckung der Schlüsselbärte (82) ist, die an der vorderen Stirnseite des Koppelteiles (41) frei münden und die sich in axialer Richtung von der vorderen Stirnseite des Koppelteils (41) aus nach hinten um ein gewisses Maß über die zweiten Anlageflächen (91) hinauserstrecken,
-an den Spannbacken (47) ist vorzugsweise im Bereich ihres hinteren Endes je eine zweite Anlagefläche (92) vorhanden, die bei allen Spannbacken (47) in der gleichen Umfangsrichtung, in der am Koppelteil die Anlageflächen (91) neben den Axialnuten (93) sitzen, neben der Lücke (52) zwischen zwei benachbarten Spannbacken (47) angeordnet ist, die vorzugsweise als Abschnitt einer Kreisringfläche ausgebildet ist, deren Flächennormale der Stirnseite (26) des Spannfutters (20) zugekehrt ist,
-an den Schlüsselbärten (82) sind eine erste Stufe (95) auf die zweite Anlagefläche (91) am Koppelteil (41) und eine zweite Stufe (96) auf die zweite Anlagefläche (92) an den Spannbacken (47) abgestimmt,
-die einander zugekehrten ebenen Stirnflächen (98; 99) der ersten Stufe (95) und der zweiten Stufe (96) haben einen lichten Abstand, der bevorzugt geringfügig größer ist, als der Außenabstand der zweiten Anlageflächen (91) am Koppelteil (41) einerseits und der zweiten Anlageflächen (92) an den Spannbacken (47) andererseits, wenn die Spannbacken (47) am Koppelteil (41) angekoppelt sind.

10. Spannfutter nach Anspruch 9,
**gekennzeinet** durch die Merkmale:
-die zweite Anlagefläche (91) am Koppelteil (41) ist im Anschluß an die Axialnut (93) auf einem Teil ihrer Umfangserstreckung mit einer Einlaufschräge ( ) versehen,
-vorzugsweise sind auch die Anlageflächen (98) der ersten Stufe (95) der Schlüsselbärte (82) mit einer Einlaufschräge ( ) versehen.

11. Spannfutter nach Anspruch 9 oder 10,
**gekennzeichnet** durch die Merkmale:
-an den Spannbacken (47) ist eine weitere (dritte) Anlagefläche (64) für eine dritte Stufe (97) der Schlüsselbärte (82) vorhanden,
-diese dritte Anlagefläche (64) ist zumindest annähernd im gleichen Umfangsbereich wie die zweite Anlagefläche (99) für die zweite Stufe (96) der Schlüsselbärte (82) angeordnet und vorzugsweise als Abschnitt eines Kreisringabschnittes ausgebildet, deren Flächennormale von der Stirnseite (26) des Spannfutters (20) abgekehrt ist,
-die dritte Stufe (97) der Schlüsselbärte (82) weist eine Anlagefläche (100) vorzugsweise in Form eines Abschnittes einer Kreisringfläche auf, deren Flächennormale der Stirnseite (26) des Spannfutters (20) zugekehrt ist und deren lichter Abstand von der Anlagefläche (99) der zweiten Stufe (96) geringfügig größer ist als der axiale Abstand der zweiten und dritten Anlagefläche (92; 64) an den Spannbacken (47).

12. Spannfutter nach einem der Ansprüche 9 bis 11,
**gekennzeichnet** durch das Merkmal:
-auf dem Schaft (84) des Schlüssels (81) ist eine Anlagescheibe (88), vorzugsweise abnehmbar, angeordnet, deren Außenhalbmesser größer als der Halbmesser der Spannflächen (49) der Spannbacken (47) ist und deren Abstand von den Schlüsselbärten (82) auf die axiale Erstreckung der Spannbacken (47) abgestimmt ist.

FIG.1

FIG. 2

FIG.3

FIG.4

97
98    99
95        96
100

82

86
85
86

82

95    97    96

89    89

81

84

88

87

FIG.5

82

83

82    82

0 258 771

FIG.6

FIG.7

FIG.8

FIG.9

FIG. 10

FIG. 16

0 258 771

FIG.15  FIG.14  FIG.13  FIG.12  FIG.11

FIG.17

FIG.18